Europäisches Patentamt

European Patent Office

Office européen des brevets

(11) Numéro de publication: **0 299 855 B1**

# FASCICULE DE BREVET EUROPEEN

(45) Date de publication de fascicule du brevet: **16.12.92**   (51) Int. Cl.5: **H02K 1/26**, H02K 1/16

(21) Numéro de dépôt: **88401780.7**

(22) Date de dépôt: **08.07.88**

(54) **Procédé d'attenuation des vibrations d'origine électromagnétique dans les machines électriques et machines en faisant application.**

(30) Priorité: **09.07.87 FR 8709723**

(43) Date de publication de la demande:
**18.01.89 Bulletin  89/03**

(45) Mention de la délivrance du brevet:
**16.12.92 Bulletin  92/51**

(84) Etats contractants désignés:
**DE ES GB IT NL SE**

(56) Documents cités:
**BE-A- 662 870
FR-A- 849 041
US-A- 1 581 828
US-A- 4 508 989**

**PATENT ABSTRACTS OF JAPAN, vol. 10, no.
197 (E-418)[2253], 10 juillet 1986, page 150 E
418 & JP-A-61 42 256 (MATSUSHITA ELEC-
TRIC IND. CO., LTD) 28-02-1986**

**PATENT ABSTRACTS OF JAPAN, vol. 7, no.
226 (E-202)[1371], 7 octobre 1983, page 62 E
202 & JP-A-58 116 031 (TOKYO SHIBAURA
DENKI K.K.) 11-07-1983**

(73) Titulaire: **ETAT-FRANCAIS représenté par le
DELEGUE GENERAL POUR L'ARMEMENT
(DPAG)
Bureau des Brevets et Inventions de la Délégation Générale pour l'Armement 26, Boulevard Victor
F-75996 Paris Armées(FR)**

(72) Inventeur: **Foggia, Albert
9, Le Bourg des Verchères-Dommartin
F-69380 Lozanne(FR)**
Inventeur: **Maestre, Jean-François
Illée B 334 Balmont Ouest
F-69009 Lyon(FR)**
Inventeur: **Sabonnadiere, Jean-Claude
388, Avenue de la Chartreuse
F-38240 Meylan(FR)**

## Description

La présente invention concerne le domaine technique des machines électriques, synchrones ou à courant continu, du type comportant un stator et un rotor ; l'un constituant l'inducteur alimenté en courant continu et l'autre l'induit de la machine, ou inversement.

Les rotors de ces machines comportent, généralement, à leur périphérie, régulièrement espacées, des encoches de réception de conducteurs ménagées en alternance avec des dents.

Le passage des dents rotoriques sous les pôles du stator se traduit par une variation de flux magnétique au niveau de chaque pôle statorique, ayant pour effet d'engendrer des vibrations d'origine électromagnétique qui se transmettent à la structure porteuse de ces machines et à leurs éléments constitutifs et, notamment leur rotor.

La propagation de ces vibrations rend la structure porteuse et/ou les organes associés facilement détectables, ce qui représente un inconvénient majeur, dans certaines applications spécifiques de ces machines.

De plus, les vibrations engendrent, inévitablement, des contraintes mécaniques appliquées aux organes comme, par exemple, de la fatigue.

On connaît des dispositifs, adaptés à certains types de machines électriques, dans lesquels les encoches et/ou les dents ne sont pas régulièrement espacées. Ainsi le brevet JPA 6142256, JP 58116031, FR 849041, US 1581828 décrivent l'utilisation de tels moyens pour la réduction, respectivement, des harmoniques de couple, des harmoniques d'encoches, des harmoniques d'induction, de la réaction d'induit. Cependant, aucun d'entre eux n'enseigne l'utilisation de tels moyens dans le but d'atténuer les vibrations d'origine électromagnétique des machines électriques synchrones du type comportant un rotor et un stator.

L'invention vise à résoudre les inconvénients précités en proposant des moyens d'atténuation des vibrations d'origine électromagnétique dans les machines électriques.

L'invention vise, également, à proposer un procédé d'atténuation des vibrations d'origine électromagnétique.

Pour atteindre les buts ci-dessus, la machine électrique conforme à l'invention est caractérisée ce que les vibrations d'origines électromagnétique sont atténuées en rendant pseudo-aléatoire la distribution des caractéristiques dimensionnelles des dents (8) et/ou des encoches (7).

Diverses autres caractéristiques ressortent de la description faite ci-dessous en référence aux dessins annexés qui montrent, à titre d'exemples non limitatifs, des formes de réalisation de l'objet de l'invention.

Les fig. 1 à 5 sont des sections droites transversales schématiques d'une machine électrique selon des variantes de réalisation conformes à l'invention.

La fig. 6 représente un schéma-bloc d'alimentation d'enroulements d'excitation d'une machine électrique.

La fig. 7 est une section droite transversale schématique d'une machine électrique selon une autre variante de réalisation.

La fig. 8 représente un schéma-bloc d'alimentation des enroulements d'excitation d'une machine électrique selon la fig. 7.

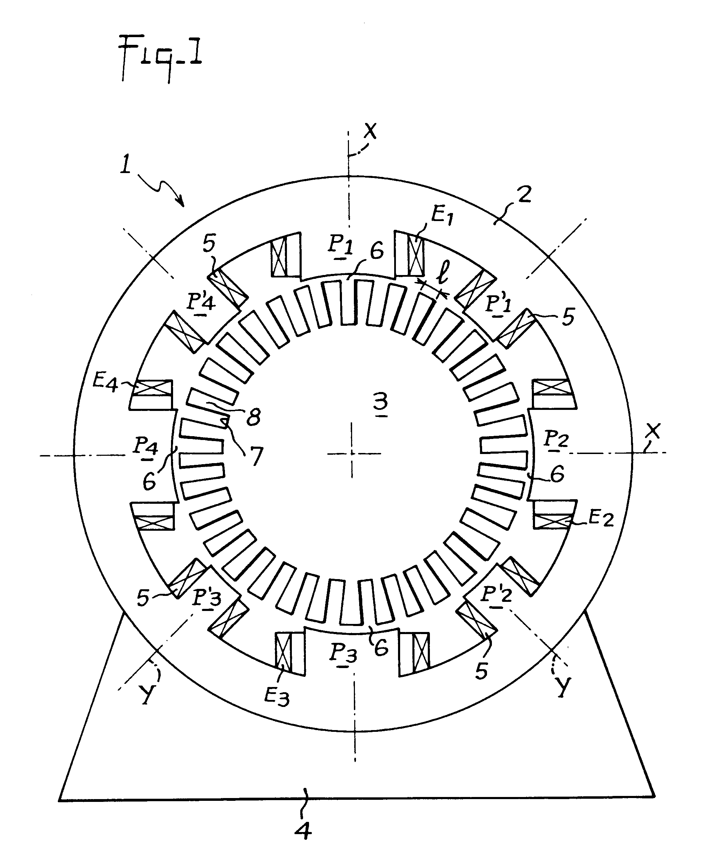

La fig. 1 illustre une variante de réalisation d'une machine électrique 1 conforme à l'invention, du type à courant continu et, par exemple, tétrapolaire.

La machine électrique 1 comporte, comme éléments constitutifs essentiels, un stator 2 et un rotor 3. Le stator 2 est fixé à un bâti 4 et le rotor 3 est monté coaxial à l'intérieur du stator 2 par des paliers, non représentés.

Le stator 2 constitue l'inducteur de la machine électrique et possède, à cet effet, quatre pôles $P_1$-$P_4$ d'excitation régulièrement répartis angulairement, selon des axes polaires X. Chaque pôle $P_1$-$P_4$ porte, respectivement, un enroulement d'excitation $E_1$-$E_4$ alimenté, de façon classique, en courant continu pour générer le champ magnétique d'excitation.

Le stator 2 comporte aussi, de façon connue, quatre pôles auxiliaires $P'_1$-$P'_4$, destinés à améliorer la commutation de ce type de machine. Chaque pôle $P'_1$-$P'_4$, qui porte un enroulement auxiliaire 5, est centré sur un axe interpolaire Y, équidistant de deux axes polaires X successifs.

Le rotor 3 constitue l'induit de la machine et canalise, par son circuit magnétique, le flux magnétique d'excitation qui traverse un entrefer 6 délimité entre le rotor 3 et chaque pôle d'excitation $P_1$-$P_4$.

Le rotor 3 comporte, à sa périphérie, une série d'encoches 7 destinées à recevoir des conducteurs d'induit non représentés et une série de dents 8. Chaque encoche 7 et dent 8 s'étendent en alternance le long du rotor 3.

Il a été représenté, à titre de simplification, une machine à courant continu tétrapolaire, mais l'invention s'applique, également, à une machine possédant, d'une manière générale, $\overline{n}$ pôles d'excitation $P_i$, associés chacun à un enroulement inducteur $E_i$.

Par ailleurs, l'invention s'applique aussi aux machines électriques, du type synchrone, qui comportent, de façon connue, un stator constitutif de l'induit et un rotor constitutif de l'inducteur.

Pour atténuer les vibrations d'origine électromagnétique dans une machine électrique, l'invention propose de créer, dans l'entrefer de cette machine, une répartition de l'induction qui soit au moins pseudo-aléatoire dans un spectre le plus large possible. Différentes réalisations pratiques de ces moyens peuvent être envisagées.

Selon la variante de réalisation, illustrée à la fig. 1, les dents 8 possèdent, à la périphérie, une largeur l aléatoire, distribuée sur toute la périphérie du rotor 3, tandis que les encoches 7 conservent une section constante de logement des conducteurs.

La distribution aléatoire de la largeur des dents 8 sur la périphérie du rotor 3 brise la régularité de la répartition des dents et des encoches autour de leur position normale.

Il résulte de cette disposition que le défilement irrégulier des dents sous les pôles d'excitation engendre des fréquences de passage aléatoires. Cette distribution constitue donc des moyens de correction aléatoire de la fréquence relative de passage entre les dents et/ou les encoches et les pôles, assurant, ainsi, un étalement du spectre de fréquence résultant.

Par conséquent, le spectre résultant ne comporte plus une raie d'encoche importante dont la fréquence est égale à la fréquence de défilement régulier des dents sous les pôles d'excitation, mais une série de fréquences aléatoires permettant ainsi d'atténuer les vibrations d'origine électromagnétique engendrées.

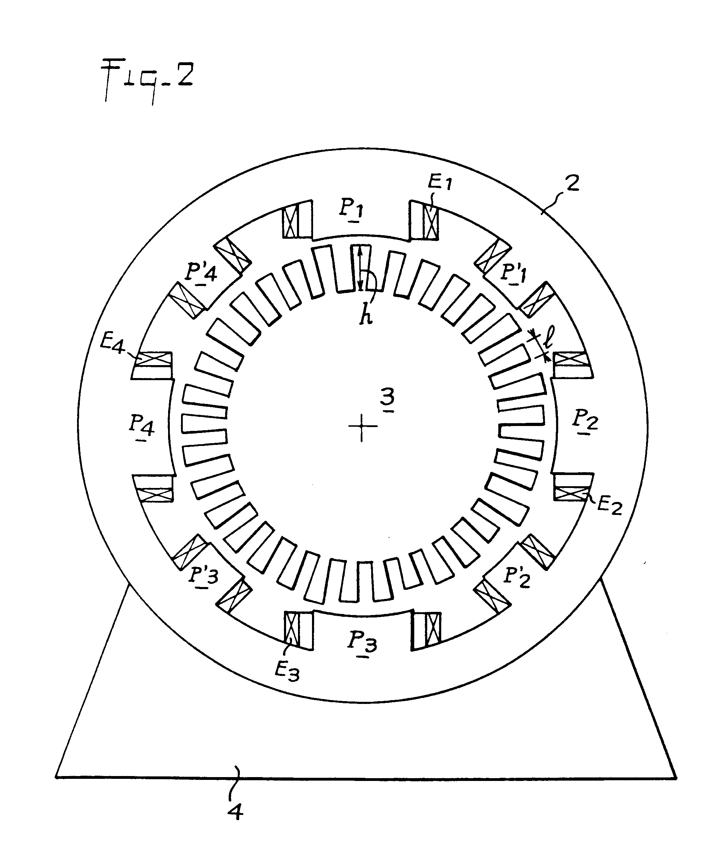

La fig. 2 illustre une autre variante de réalisation des moyens de correction selon l'invention, adaptés au rotor d'une machine électrique permettant d'atténuer les vibrations d'origine électromagnétique.

A cet effet, les dents 8 possèdent une hauteur h aléatoire, distribuée sur toute la périphérie du rotor 3, ainsi qu'une largeur l aléatoire, comme décrite précédemment.

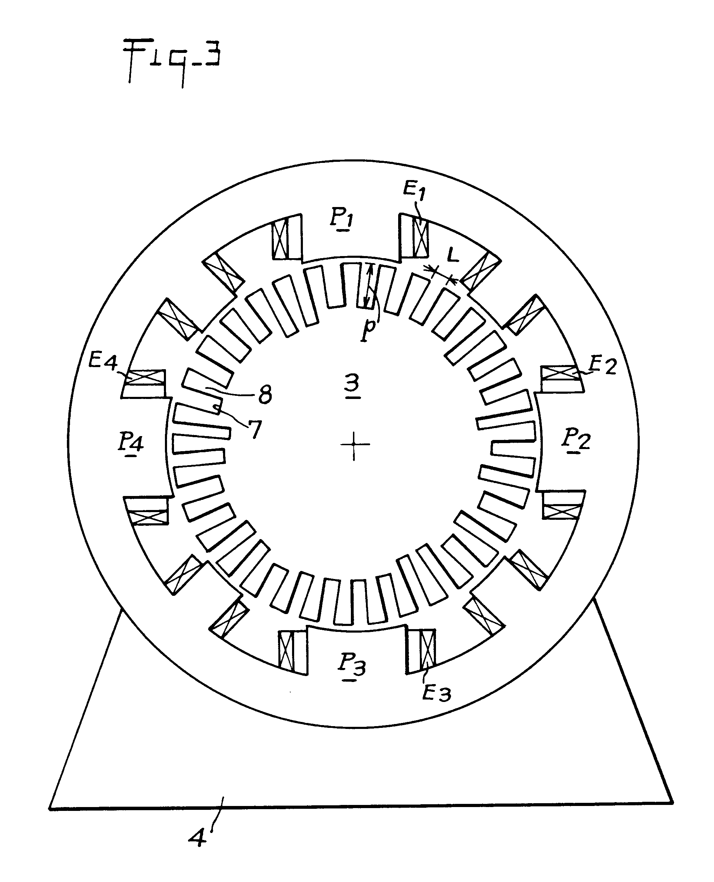

La fig. 3 illustre une autre variante de réalisation des moyens de correction, dans laquelle les encoches a possèdent une profondeur p aléatoire et, à la périphérie, une largeur L aléatoire, distribuées sur toute la périphérie du rotor 3, tandis que les dents 8 conservent une section constante de passage du flux.

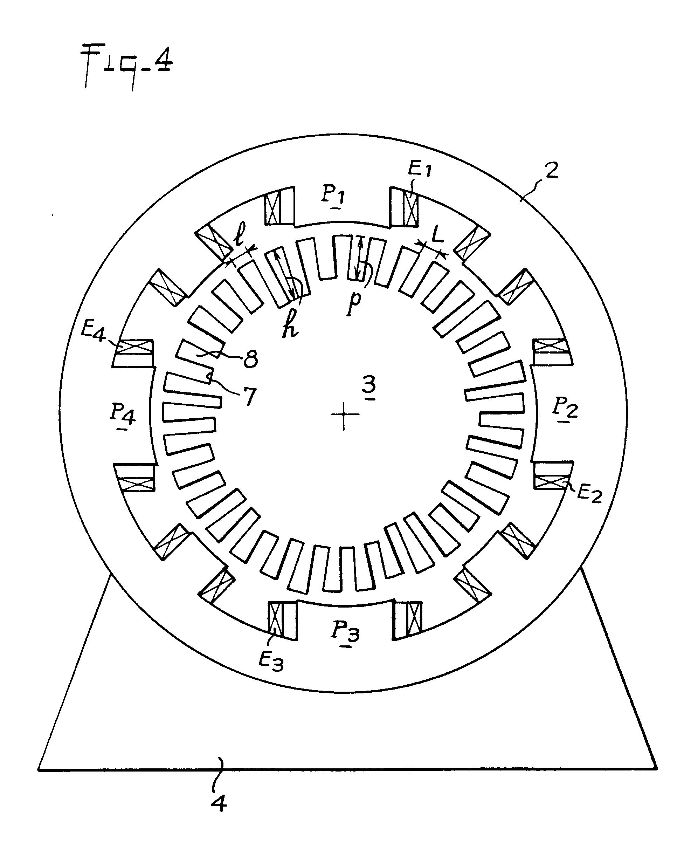

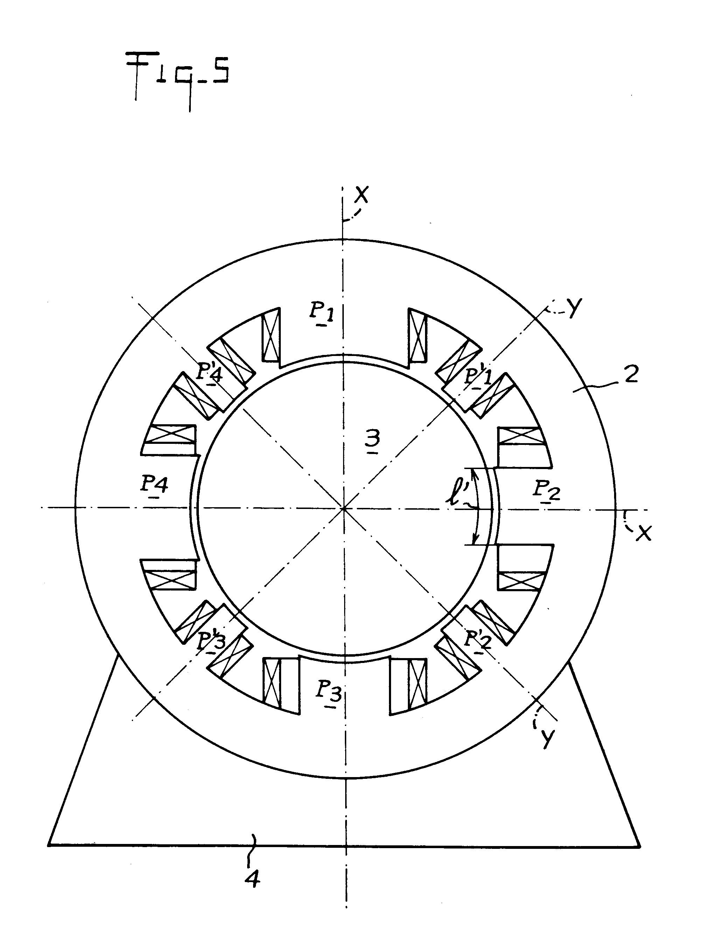

La fig. 4 représente une autre variante de réalisation qui regroupe les caractéristiques dimensionnelles des dents et des encoches des fig. 2 et 3, en vue de constituer les moyens de correction conformes à l'invention.

A cet effet, les dents 8 possèdent une largeur l et une hauteur h aléatoires distribuées sur la périphérie du rotor et les encoches 7 possèdent une profondeur p et une largeur L aléatoires, réparties également sur la périphérie du rotor.

Il est à remarquer qu'il peut être envisagé de réaliser d'autres variantes des moyens de correction du rotor, à partir de toutes les combinaisons possibles, simples ou composées, des caractéristiques dimensionnelles des dents et/ou des encoches.

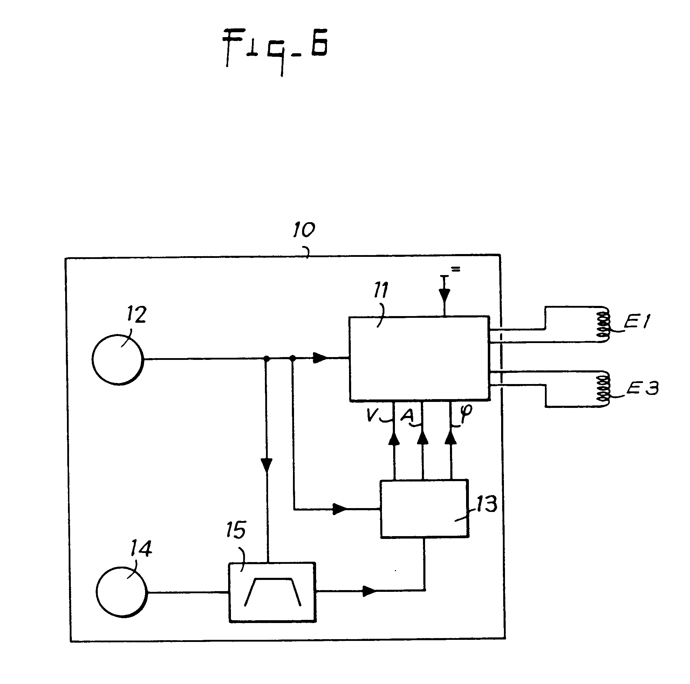

La fig. 5 illustre une autre variante de réalisation de l'invention dans laquelle les moyens de correction sont adaptés au stator de la machine. A cet effet, les pôles d'excitation $P_1$-$P_4$ sont disposés de manière aléatoire sur la périphérie du stator. Comme illustré, les pôles $P_1$-$P_4$ possèdent une largeur aléatoire l' distribuée sur toute la périphérie du stator, tandis que les pôles d'excitation auxiliaire $P'_1$-$P'_4$ sont toujours centrés sur les axes interpolaires Y.

Il est à remarquer que cette disposition des pôles peut être associée à toute combinaison possible des caractéristiques dimensionnelles des dents et/ou des encoches du rotor.

Par ailleurs, il peut être envisagé une répartition pseudo-aléatoire des encoches, des dents et/ou des pôles, sur la périphérie de l'élément constitutif correspondant de la machine, permettant d'obtenir, sur cette périphérie, une répartition aléatoire répétitive. Il peut être prévu, par exemple, de disposer, circonférentiellement, deux distributions aléatoires identiques s'étendant ainsi sur 180 degrés chacune.

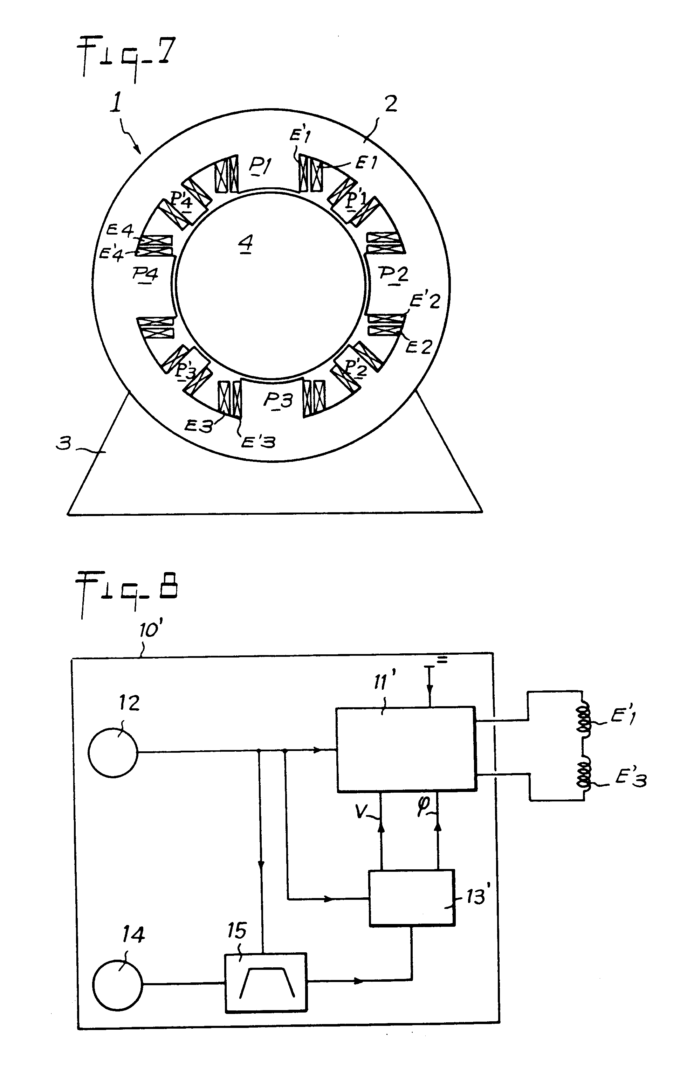

La fig. 6 illustre des moyens 10 de commande de l'alimentation des enroulements d'excitation $E_1$-$E_4$ associés aux pôles $P_1$-$P_4$. De préférence, les moyens de commande 10 sont en nombre égal au nombre de paires de pôles et alimentent les enroulements des pôles diamétralement opposés comme, par exemple, les enroulements $E_1$, $E_3$ respectifs des pôles $P_1$, $P_3$.

Toutefois, il peut être prévu, pour les machines possédant un nombre élevé de pôles, un moyen de commande 10 individuel pour chaque enroulement d'excitation associé à un pôle.

Les moyens de commande 10 se composent de moyens 11 d'application d'un courant d'excitation aux enroulements inducteurs $E_1$-$E_4$. Les moyens d'application 11 sont synchronisés à la fréquence de passage des encoches sous les pôles. Cette fréquence est obtenue à partir d'un capteur de vitesse 12 monté sur le rotor 3. Les moyens d'application 11 sont pilotés par des moyens d'asservissement 13 commandés en entrée par la pulsation des encoches et par les données détectées par un capteur de vibrations 14 et filtrées 15.

Les moyens d'application 11 sont réalisés, par exemple, par un onduleur à transistors à modulation de largeur d'impulsions, un pont redresseur monophasé ou triphasé ou par un amplificateur de puissance.

Les moyens d'application 11 délivrent un courant d'excitation qui est composé d'un signal continu auquel est superposé un signal variable.

Le signal continu crée le champ magnétique d'excitation nécessaire pour obtenir un fonctionnement normal de la machine électrique.

Le signal variable alternativement et, de préférence, sinusoïdal, modifie le champ magnétique d'excitation, en relation avec les variations de flux magnétique ou d'entrefer, engendrées par le passage des encoches sous les pôles.

Par ces moyens, il devient possible de compenser le balourd magnétique provenant de la répartition irrégulière du courant à la périphérie du rotor, répartition irrégulière due à la distribution pseudo-aléatoire ou aléatoire des dents et/ou encoches.

Il peut être considéré que le signal variable est de la forme : $V \sin(\omega t + \phi)$. La pulsation $\omega$ correspond à la pulsation des encoches. L'amplitude $V$ et la phase $\phi$ du signal sont, respectivement, représentatives de l'amplitude et de la position angulaire des vibrations par rapport au rotor et, par extension, de la variation d'entrefer détectée par les capteurs de vibrations 14 et de vitesse 12.

A cet effet, le capteur de vibrations 14 peut être constitué par une sonde à effet Hall, un capteur d'accélération ou de proximité monté, par exemple, au droit des pôles. Les informations détectées par le capteur 14 sont traitées dans le filtre 11, du type suiveur passe-bande, centré sur la fréquence de passage des encoches, pour éliminer ainsi les bruits parasites extérieurs à la bande passante déterminée.

Les moyens d'asservissement 13, qui délivrent le signal continu, permettent de modifier, à volonté, l'amplitude $V$ et la phase $\phi$ du signal variable par rapport au rotor. Cependant, le signal continu peut être délivré directement par les moyens d'application 11.

Les moyens d'asservissement 13 définissent la phase $\phi$ et l'amplitude $V$, de manière à diminuer les vibrations d'origine électromagnétique. A cet effet, les moyens 13 recherchent, par calcul, le minimum des données fournies par le capteur de vibrations qui dépend des variables $V$ et $\phi$. Le minimum est recherché, d'abord par rapport à l'une de ces deux variables, ensuite, par rapport à l'autre, jusqu'à l'obtention du minimum absolu.

Les moyens de commande 10 délivrent donc un courant d'excitation permanent, calé sur la fréquence de passage des dents du rotor et modulable, à volonté, en amplitude et en phase, permettant de solliciter radialement le rotor de la machine, en vue d'éliminer les vibrations d'origine électromagnétique.

Il doit être considéré que les moyens de commande 10 alimentent les enroulements avec des courants d'excitation qui sont déphasés entre eux, d'une valeur variant de 0 à 180 degrés, pour compenser les variations de flux par pôle, de manière que le flux résultant sous chaque pôle soit le plus constant possible, quelle que soit la position du rotor.

La fig. 7 illustre une variante de réalisation de l'objet de l'invention, dans laquelle chaque pôle d'excitation $P_1$-$P_4$ de la machine est muni, respectivement, d'enroulements supplémentaires de compensation $E'_1$-$E'_4$, montés de façon classique.

Les enroulements d'excitation $E_1$-$E_4$ sont alimentés par le signal continu, créateur du champ magnétique d'excitation nécessaire au fonctionnement normal de la machine, tandis que les enroulements de compensation $E'_1$-$E'_4$ sont alimentés par le signal alternatif, de forme générale décrite ci-dessus.

Il en résulte que le champ magnétique d'excitation résultant est analogue au champ magnétique produit par le courant continu modulé par le signal alternatif.

Les moyens de commande 10' associés aux enroulements de compensation $E'_1$-$E'_4$, tel que cela ressort de la fig. 8, possèdent une configuration fonctionnelle identique à celle des moyens de commande 10 déjà décrits (fig. 6).

Les moyens d'asservissement 13' permettent, simplement, de modifier la phase $\phi$ et l'amplitude $V$ du signal alternatif délivré par les moyens d'application 11', tel qu'un onduleur monophasé.

## Revendications

1. Procédé d'atténuation des vibrations d'origine électromagnétique dans les machines électriques synchrones ou à courant continu, du type comportant un stator (2) et un rotor (3) comme éléments constitutifs , l'un portant (n) pôles (Pi) associés chacun à des enroulements, l'autre présentant, circonférentiellement, en alternance, des encoches (7) de réception de conducteurs, et des dents (8), procédé caractérisé en ce qu'il consiste à prévoir , sur l'un au moins des éléments constitutifs (2, 3), des moyens qui rendent non constante la fréquence relative de passage des dents (8) et/ou des encoches (7) devant les pôles (Pi).

2. Procédé selon la revendication 1, caractérisé en ce qu'il consiste à prévoir ces moyens sur l'élément constitutif des dents (8) et des encoches (7).

3. Procédé selon la revendication 1 ou 2, caractérisé en ce qu'il consiste à prévoir ces moyens sur l'élément constitutif porteur des pôles (Pi).

4. Procédé selon les revendications 1,2 ou 3, caractérisé en ce qu'il consiste à prévoir, en plus, pour au moins un pôle (Pi), des moyens

4

(10, 10') qui agissent sur les enroulements associés audit pôle.

5. Machine électrique synchrone ou à courant continu, du type comportant un stator (2) et un rotor (3) comme éléments constitutifs , l'un portant (n) pôles (Pi) associés chacun à des enroulements, l'autre présentant, circonférentiellement, en alternance, des encoches (7) de réception de conducteurs, et des dents (8), machine caractérisée en ce que les vibrations d'origines électromagnétique sont atténuées en rendant pseudo-aléatoire la distribution des caractéristiques dimensionnelles des dents (8) et/ou des encoches (7) .

6. Machine électrique selon la revendication 2, caractérisée en ce que la distribution des caractéristiques dimensionnelles est aléatoire sur toute la surface périphérique de l'élément constitutif porteur des encoches (7) et des dents (8).

7. Machine électrique selon la revendication 5 ou 6, caractérisée en ce que les dents (8) possèdent une largeur $(\underline{l})$ aléatoire.

8. Machine électrique selon la revendication 5, 6 ou 7, caractérisée en ce que les dents (8) possèdent une hauteur $(\underline{h})$ aléatoire.

9. Machine électrique selon la revendication 5, 6, 7 ou 8, caractérisée en ce que les encoches (7) possèdent une largeur $(\underline{L})$ aléatoire.

10. Machine électrique selon la revendication 5, 6, 7, 8 ou 9, caractérisée en ce que les encoches (7) possèdent une profondeur $(\underline{p})$ aléatoire.

11. Machine électrique selon l'une des revendications précédentes, caractérisée en ce qu'elle comporte, en plus, un élément constitutif portant $(\underline{n})$ pôles (Pi) possédant une largeur $(\underline{l'})$ aléatoire et des pôles auxiliaires (P'i) centrés sur des axes interpolaires (X).

12. Machine électrique selon l'une des revendications précédentes, caractérisée en ce qu'elle comporte, en plus, pour au moins un pôle (Pi), des moyens (10, 10') agissant sur les enroulements associés audit pôle, de manière à modifier localement le champ magnétique et imposer une sollicitation radiale au rotor, en relation avec des vibrations d'origine électromagnétique produites par la machine, ces moyens comprenant :
- un capteur (12) de détection de la fréquence de rotation du rotor,
- un capteur (14) de détection des vibrations en amplitude et en phase, associé à un filtre (15) suiveur passe-bande centré sur la fréquence de rotation du rotor,
- des moyens (11, 11') d'application aux enroulements associés d'un signal d'excitation alternatif synchronisé à la fréquence de rotation du rotor,
- et des moyens (13, 13') d'asservissement des moyens d'application, modifiant la phase et le module du signal d'excitation alternatif, en relation avec la phase et l'amplitude des vibrations détectées.

13. Machine électrique selon la revendication 12, caractérisée en ce que les enroulements associés sont constitués des enroulements d'excitation (Ei) de la machine, alimentés par un courant continu d'excitation modulé par un signal alternatif délivré par les moyens d'application (11) qui sont pilotés par les moyens d'asservissement (13).

14. Machine électrique selon la revendication 12, caractérisée en ce que les enroulements associés sont constitués des enroulements (Ei) d'excitation de la machine alimentés par un signal continu et d'au moins un enroulement de compensation (E'i) alimenté par un signal alternatif délivré par les moyens (11') d'application qui sont pilotés par les moyens d'asservissement (13').

## Claims

1. Process for attenuating vibrations of electromagnetic origin in synchronous or direct current electrical machines, of the type comprising a stator (2) and a rotor (3) as component parts, one having (n) poles (Pi) each associated with windings, the other having slots (7) accommodating conductors and teeth (8) alternately around its circumference, a process characterised by the fact that it involves providing systems, on at least one of the component parts (2, 3), which make the relative frequency of passage of the teeth (8) and/or the slots (7) in front of the poles (Pi) non-constant.

2. Process according to claim 1, characterised by the fact that it involves providing these systems on the constituent part of the teeth (8) and slots (7).

3. Process according to claim 1 or 2, characterised by the fact that it involves providing these systems to the constituent part carrying

the poles ($P_i$).

4. Process according to claims 1, 2 or 3, characterised by the fact that it involves providing, in addition, for at least 1 pole ($P_i$), systems (10, 10') which act on the windings associated with the said pole.

5. Synchronous or direct current electrical machine, of the type comprising a stator (2) and a rotor (3) as component parts, one having (n) poles ($P_i$) each associated with windings, the other having slots (7) for accommodating conductors and teeth (8), arranged alternately around its circumference, characterised by the fact that the vibrations of electromagnetic origin are attenuated by making the distribution of the dimensional characteristics of the teeth (8) and/or the slots (7) pseudo-random.

6. Electrical machine according to claim 2, characterised by the fact that the distribution of the dimensional characteristics is random over the entire peripheral surface area of the constituent part carrying the slots (7) and the teeth (8).

7. Electrical machine according to claim 5 or 6, characterised by the fact that the teeth (8) have a random width (l).

8. Electrical machine according to claim 5, 6 or 7, characterised by the fact that the teeth (8) have a random height (h).

9. Electrical machine according to claim 5, 6, 7 or 8, characterised by the fact that the slots (7) have a random width (L).

10. Electrical machine according to claim 5, 6, 7, 8 or 9, characterised by the fact that the slots (7) have a random depth (p).

11. Electrical machine according to one of the above claims, characterised by the fact that it also comprises a component part carrying (n) poles ($P_i$) with a random width (l') and auxiliary pole ($P'_i$) centred on the interpole axes (X).

12. Electrical machine according to one of the above claims, characterised by the fact that it also comprises, for at least one pole ($P_i$), systems (10, 10') acting on the windings associated with the said pole, so as locally to modify the magnetic field and impose a radial stress on the rotor, in relation to the vibrations of electromagnetic origin produced by the machine, these systems comprising:

- a sensor (12) for detecting the frequency of rotation of the rotor,
- a sensor (14) for detecting vibrations in amplitude and phase, associated with a band pass filter (15) centred on the frequency of rotation of the rotor,
- systems (11, 11') for applying to the associated windings an alternating excitation signal synchronised with the frequency of rotation of the rotor,
- and systems (13, 13') for controlling the application systems, modifying the phase and magnitude of the alternating excitation signal, in relation to the phase and amplitude of the vibrations detected.

13. Electrical machine according to claim 12, characterised by the fact that the associated windings consist of the excitation windings ($E_i$) of the machine, supplied with a direct excitation current modulated by an alternating signal provided by the application systems (11) which are controlled by the servo systems (13).

14. Electrical machine according to claim 12, characterised by the fact that the associated windings consist of the excitation windings ($E_i$) of the machine supplied with a continuous signal and of at least one compensating winding ($E'_i$) supplied with an alternating signal from the application systems (11') which are controlled by the servo systems (13').

**Patentansprüche**

1. Verfahren zur Abschwächung von Vibrationen elektromagnetischen Ursprungs in Synchron- oder Gleichstrommaschinen, bestehend aus einem Stator (2) und einem Rotor (3), wobei einer (n) Pole (Pi) aufweist, die jeweils Wicklungen zugeordnet sind, und der andere an seinem Umfang abwechselnd Kerben (7) zur Aufnahme von Leitern und Zähne (8) besitzt, dadurch gekennzeichnet, dass an zumindest einem der Bestandteile (2, 3) Mittel vorgesehen sind, die die relative Durchlauffrequenz der Zähne (8) und/oder der Kerben (7) vor den Polen (Pi) nicht konstant gestaltet.

2. Verfahren gemäss dem Anspruch 1, dadurch gekennzeichnet, dass diese Mittel auf dem Bestandteil der Zähne (8) und der Kerben (7) vorgesehen sind.

3. Verfahren gemäss den Ansprüchen 1 oder 2, dadurch gekennzeichnet, dass diese Mittel auf dem die Pole (Pi) tragenden Bestandteil vorgesehen sind.

4. Verfahren gemäss den Ansprüchen 1, 2 oder 3, dadurch gekennzeichnet, dass ausserdem zumindest für einen Pol (Pi) Mittel (10, 10') vorgesehen sind, die auf die dem besagten Pol zugeordneten Wicklungen einwirken.

5. Synchron- oder Gleichstromelektromaschine, bestehend aus einem Stator (2) und einem Rotor (3), wobei einer (n) Pole ($P_i$) aufweist, die jeweils Wicklungen zugeordnet sind, und der andere an seinem Umfang abwechselnd Kerben (7) zur Aufnahme von Leitern und Zähne (8) besitzt, dadurch gekennzeichnet, dass die Vibrationen elektromagnetischen Ursprungs abgeschwächt werden, indem die Verteilung der Abmessungsmerkmale der Zähne (8) und/oder der Kerben (7) pseudozufällig gestaltet ist.

6. Elektromaschine gemäss Anspruch 2, dadurch gekennzeichnet, dass die Verteilung der Abmessungsmerkmale über die gesamte Umfangsfläche des die Kerben (7) und die Zähne (8) tragenden Bestandteils erfolgt.

7. Elektromaschine gemäss dem Anspruch 5 oder 6, dadurch gekennzeichnet, dass die Zähne (8) eine zufällige Breite (l) besitzen.

8. Elektromaschine gemäss dem Anspruch 5, 6 oder 7, dadurch gekennzeichnet, dass die Zähne (8) eine zufällige Höhe (h) besitzen.

9. Elektromaschine gemäss dem Anspruch 5, 6, 7 oder 8, dadurch gekennzeichnet, dass die Kerben (7) eine zufällige Breite (L) besitzen.

10. Elektromaschine gemäss dem Anspruch 5, 6, 7, 8 oder 9, dadurch gekennzeichnet, dass die Kerben (7) eine zufällige Tiefe (p) besitzen.

11. Elektromaschine gemäss einem der vorstehenden Ansprüche, dadurch gekennzeichnet, dass sie ausserdem ein (n) Pole ($P_i$) tragendes Bestandteil besitzt, mit einer zufälligen Breite (l') und Nebenpole ($P'_i$), die auf die Achsen ($\overline{X}$) zwischen den Polen ausgerichtet sind.

12. Elektromaschine gemäss einem der vorstehenden Ansprüche, dadurch gekennzeichnet, dass sie ausserdem für zumindest einen Pol ($P_i$) Mittel (10, 10') besitzt, die auf die diesem Pol zugeordneten Wicklungen einwirken, um das Magnetfeld örtlich zu ändern und dem Rotor eine radiale Belastung zu verleihen, in Verbindung mit den von der Maschine erzeugten Vibrationen elektromagnetischen Ursprungs, wobei es sich um folgende Mittel handelt:

- einem Geber (12) zur Erfassung der Drehfrequenz des Rotors,
- einem Geber (14) zur Erfassung der Amplitude und der Phase der Vibrationen, dem ein Passbandfilter (15) zugeordnet ist, das auf die Drehfrequenz des Rotors zentriert ist,
- Mitteln (11, 11') zur Beaufschlagung der zugeordneten Wicklungen mit einem alternativen, mit der Drehfrequenz des Rotors synchronisierten Erregungssignal,
- und Mitteln (13, 13') zur Regelung der Beaufschlagungsmittel, die, in Verbindung mit der Phase und der Amplitude der erfassten Vibrationen, die Phase und das Modul des alternativen Erregungssignals ändern.

13. Elektromaschine gemäss dem Anspruch 12, dadurch gekennzeichnet, dass die zugeordneten Wicklungen aus Erregungswicklungen ($E_i$) der Maschine bestehen, die von einem alternativen Signal modulierten Erregungsgleichstrom versorgt werden, der von den durch die Regelmittel (13) gesteuerten Beaufschlagungsmitteln (11) geliefert wird.

14. Elektromaschine gemäss dem Anspruch 12, dadurch gekennzeichnet, dass die zugeordneten Wicklungen aus Erregungswicklungen ($E_i$) der Maschine bestehen, die von einem ständigen Signal versorgt werden, und aus zumindest einer Kompensationswicklung ($E'_i$), die von einem von den durch die Regelmittel (13') gesteuerten Beaufschlagungsmitteln (11') gelieferten, alternativen Signal versorgt wird.

# Fig.1

## Fig.2

Fig.3

Fig.4

Fig-5

# Fig_6

Fig-7

Fig-8